# EUROPÄISCHE PATENTANMELDUNG

(11) **EP 4 764 309 A1**
(43) Veröffentlichungstag der Anmeldung: **24.06.2026**
(21) Anmeldenummer: 25211238.8
(22) Anmeldetag: 27.10.2025
(51) Int. Cl.: F23N 3/00

(54) **VERFAHREN ZUM STARTEN DES VERBRENNUNGSBETRIEBS EINES BRENNSTOFFBETRIEBENEN FAHRZEUGHEIZGERÄTS**

(30) Priorität: 19.12.2024 DE 102024138809
(71) Anmelder: Eberspächer Climate Control Systems GmbH, 73730 Esslingen (DE)
(72) Erfinder: Rösch, Henry, Grafenau-Döffingen (DE)
(74) Vertreter: Ruttensperger Lachnit Trossin Gomoll

(57) **Zusammenfassung**

Ein Verfahren zum Starten des Verbrennungsbetriebs eines brennstoffbetriebenen Fahrzeugheizgeräts umfasst die Maßnahmen:
a) in einer Zündphase nach Erzeugung eines Startbefehls zum Starten des Verbrennungsbetriebs, Betreiben einer Verbrennungsluftfördervorrichtung zum Fördern von Verbrennungsluft in eine Brennkammer mit einer der Zündphase zugeordneten Zündphasen-Drehzahl (Nz) und Betreiben einer Brennstofffördervorrichtung zum Fördern von Brennstoff in die Brennkammer mit einer der Zündphase zugeordneten Zündphasen-Förderrate (Fz) zum Bereitstellen eines zündfähigen Brennstoff/Verbrennungsluft-Gemisches,
b) in einer auf die Zündphase folgenden ersten Drehzahlanpassungsphase, Verändern der Drehzahl (N) der Verbrennungsluftfördervorrichtung (38) auf eine nicht zur Erzeugung einer Verbrennungsresonanz in der Brennkammerbaugruppe (12) führende Flammstabilisierungsphasen-Drehzahl (N_{F}),
c) in einer auf die erste Drehzahlanpassungsphase folgenden Flammstabilisierungsphase, Betreiben der Verbrennungsluftfördervorrichtung im Wesentlichen mit der Flammstabilisierungsphasen-Drehzahl (N_{F}),
d) in einer auf die Flammstabilisierungsphase folgenden zweiten Drehzahlanpassungsphase, Verringern der Drehzahl (N) der Verbrennungsluftfördervorrichtung auf eine Verbrennungsbetrieb-Drehzahl (Nv),
e) in einem auf die zweite Drehzahlanpassungsphase folgenden Verbrennungsbetrieb, Betreiben der Verbrennungsluftfördervorrichtung im Wesentlichen mit der Verbrennungsbetrieb-Drehzahl (Nv).

## Beschreibung

Die vorliegende Erfindung betrifft ein Verfahren zum Starten des Verbrennungsbetriebs eines brennstoffbetriebenen Fahrzeugheizgeräts.

Als Zuheizer oder Standheizungen bzw. Innenraumheizungen genutzte brennstoffbetriebene Fahrzeugheizgeräte werden dadurch gestartet, dass einer Brennkammer einer Brennkammerbaugruppe eines derartigen Fahrzeugheizgeräts eine für die Startphase vorgegebene Menge von Brennstoff und Verbrennungsluft zugeführt wird, um in der Brennkammer insbesondere im Bereich eines Zündorgans, beispielsweise Glühkerze, ein zündfähiges Gemisch zu erzeugen. Nach der Zündung dieses Gemisches entwickelt sich in der Brennkammerbaugruppe eine Flamme. Bis zum Erreichen einer stabilen Verbrennung bzw. einer voll ausgebildeten Flamme können, begünstigt durch thermische Zustände in der Brennkammerbaugruppe, insbesondere eine vergleichsweise niedrige Temperatur eines die sich ausbildende Flamme umgebenden Flammrohrs der Brennkammerbaugruppe, lokal instabile Verbrennungszustände auftreten, die bei entsprechender Anregung zu einer akustisch deutlich wahrnehmbaren Verbrennungsresonanz führen können.

Es ist die Aufgabe der vorliegenden Erfindung, ein Verfahren zum Starten des Verbrennungsbetriebs eines brennstoffbetriebenen Fahrzeugheizgeräts vorzusehen, mit welchem in einer Startphase beim Übergang in den Verbrennungsbetrieb das Auftreten akustisch wahrnehmbar Verbrennungszustände vermieden werden kann.

Erfindungsgemäß wird diese Aufgabe gelöst durch ein Verfahren zum Starten des Verbrennungsbetriebs eines brennstoffbetriebenen Fahrzeugheizgeräts, das Fahrzeugheizgerät umfassend:
- eine mit Brennstoff und Verbrennungsluft zu speisende Brennkammerbaugruppe,
- eine Brennstofffördervorrichtung zum Fördern von Brennstoff in eine Brennkammer der Brennkammerbaugruppe,
- eine Verbrennungsluftfördervorrichtung zum Fördern von Verbrennungsluft in die Brennkammer, wobei die Verbrennungsluftfördervorrichtung wenigstens ein zum Fördern von Verbrennungsluft zur Drehung antreibbares Förderrad umfasst.

Das Verfahren umfasst die Maßnahmen:
a) in einer Zündphase nach Erzeugung eines Startbefehls zum Starten des Verbrennungsbetriebs, Betreiben der Verbrennungsluftfördervorrichtung zum Fördern von Verbrennungsluft in die Brennkammer mit einer der Zündphase zugeordneten Zündphasen-Drehzahl und Betreiben der Brennstofffördervorrichtung zum Fördern von Brennstoff in die Brennkammer mit einer der Zündphase zugeordneten Zündphasen-Förderrate zum Bereitstellen eines zündfähigen Brennstoff/Verbrennungsluft-Gemisches,
b) in einer auf die Zündphase folgenden ersten Drehzahlanpassungsphase, Verändern der Drehzahl der Verbrennungsluftfördervorrichtung auf eine nicht zur Erzeugung einer Verbrennungsresonanz in der Brennkammerbaugruppe führende Flammstabilisierungsphasen-Drehzahl,
c) in einer auf die erste Drehzahlanpassungsphase folgenden Flammstabilisierungsphase, Betreiben der Verbrennungsluftfördervorrichtung im Wesentlichen mit der Flammstabilisierungsphasen-Drehzahl,
d) in einer auf die Flammstabilisierungsphase folgenden zweiten Drehzahlanpassungsphase, Verringern der Drehzahl der Verbrennungsluftfördervorrichtung auf eine Verbrennungsbetrieb-Drehzahl,
e) in einem auf die zweite Drehzahlanpassungsphase folgenden Verbrennungsbetrieb, Betreiben der Verbrennungsluftfördervorrichtung im Wesentlichen mit der Verbrennungsbetrieb-Drehzahl.

Bei dem erfindungsgemäßen Verfahren wird, anschließend an die Zündphase und somit kurz nach dem Zünden des in der Brennkammer gebildeten Gemisches aus Brennstoff und Verbrennungsluft, durch Verändern der Drehzahl der Verbrennungsluftfördervorrichtung dafür gesorgt, dass eine durch die Drehzahl der Verbrennungsluftfördervorrichtung und die Bauart des Förderrads der Verbrennungsluftfördervorrichtung, insbesondere die Anzahl an Förderschaufeln des Förderrads, wesentlich bestimmte Anregungsfrequenz der Verbrennungsluftfördervorrichtung einen Wert aufweist, der nicht im Bereich einer Resonanzfrequenz der in der Brennkammer bzw. einem an diese anschließenden Flammrohr der Brennkammerbaugruppe zum Ausbilden der Flamme ablaufenden Verbrennung liegt. Abhängig von der Bauart eines Fahrzeugheizgeräts und auch abhängig von Umgebungsbedingungen kann eine derartige Resonanzfrequenz im Bereich von 70-80 Hz liegen.

Die Anregung von akustisch deutlich wahrnehmbaren Verbrennungsresonanzen in der Brennkammerbaugruppe in einer Phase, in welcher diese noch nicht auf Betriebstemperatur ist und daher thermisch instabile Bedingungen insbesondere in dem die sich ausbildende Flamme umgebenden Bereich der Brennkammerbaugruppe vorliegen, kann somit vermieden werden. Gleichzeitig kann in dieser Phase des Entstehens einer stabilen Verbrennung der die Flamme umgebende Bereich der Brennkammerbaugruppe, insbesondere das Flammrohr derselben, auf Betriebstemperatur gebracht werden. Ist dieser Zustand erreicht, kann eine thermische Wechselwirkung zwischen der Flamme und beispielsweise dem Flammrohr auch dann, wenn die Anregungsfrequenz der Verbrennungsluftfördervorrichtung in einem hinsichtlich der Anregung von Verbrennungsresonanzen grundsätzlich kritischen Wertebereich liegt, im Allgemeinen nicht zum Entstehen von Verbrennungsresonanzen führen.

Um durch Verändern der Drehzahl der Verbrennungsluftfördervorrichtung dafür sorgen zu können, dass einerseits die Anregung von Verbrennungsresonanzen und andererseits das Ausstoßen eines übermäßigen Schadstoffanteils oder von unverbranntem Brennstoff vermieden wird, wird vorgeschlagen, dass bei der Maßnahme b) zum Bereitstellen der nicht zur Erzeugung einer Verbrennungsresonanz in der Brennkammerbaugruppe führenden Flammstabilisierungsphasen-Drehzahl die Drehzahl der Verbrennungsluftfördervorrichtung, ausgehend von der Zündphasen-Drehzahl, derart erhöht wird, dass bei der Maßnahme c) in der Brennkammer ein unterstöchiometrisches Gemisch aus Brennstoff und Verbrennungsluft erzeugt wird.

Insbesondere kann dabei vorgesehen sein, dass bei der Maßnahme b) die Drehzahl der Verbrennungsluftfördervorrichtung derart erhöht wird, dass das in der Brennkammer erzeugte Gemisch aus Brennstoff und Verbrennungsluft einen Lambda-Wert von weniger als 0,8 aufweist. Es hat sich gezeigt, dass ein derartig niedriger Lambda-Wert eine derart hohe Förderrate und damit auch eine derart hohe Drehzahl der Verbrennungsluftfördervorrichtung bedingt, dass durch die Rotation des Förderrads der Verbrennungsluftfördervorrichtung in der geförderten Luft generierte und sich auch in den Bereich der Brennkammer ausbreitende periodische Druckvariationen nicht zur Anregung einer Verbrennungsresonanz führen können.

Um nach Erzeugung des Startbefehls möglichst schnell eine Zündung zu erreichen, können bei der Maßnahme a) die Zündphasen-Drehzahl und die Zündphasen-Förderrate zum Bereitstellen eines im Wesentlichen stöchiometrischen, beispielsweise auch leicht überstöchiometrischen, Brennstoff/Verbrennungsluft-Gemisches eingestellt werden.

Zum Erreichen eines im Wesentlichen gleichmäßigen Übergangs zwischen Zuständen verschiedener Drehzahl der Verbrennungsluftfördervorrichtung, wird vorgeschlagen, dass bei der Maßnahme b) die Drehzahl mit im Wesentlichen konstanter Drehzahländerungsrate erhöht wird, oder/und dass bei der Maßnahme d) die Drehzahl mit im Wesentlichen konstanter Drehzahländerungsrate verringert wird.

Um möglichst schnell in eine Betriebsphase zu gelangen, in welcher die Flamme stabilisiert werden kann, wird vorgeschlagen, dass bei der Maßnahme b) die Drehzahl mit einem maximalen ersten Betrag der Drehzahländerungsrate erhöht wird, dass bei der Maßnahme d) die Drehzahl mit einem maximalen zweiten Betrag der Drehzahländerungsrate verringert wird, und dass der maximale erste Betrag größer ist als der maximale zweite Betrag.

Hierbei entspricht besonders bevorzugt der maximale erste Betrag der Änderungsrate im Wesentlichen einer bei der Verbrennungsluftfördervorrichtung zum Erhöhen der Drehzahl maximal einstellbaren Drehzahländerungsrate. Dies bedeutet, dass die baulichen bzw. auch ansteuerungstechnischen Möglichkeiten zum schnellen Erhöhen der Drehzahl der Verbrennungsluftfördervorrichtung bzw. des wenigstens einen Förderrads derselben so weit als möglich ausgenutzt werden, ohne die Gefahr einer Beschädigung von Systembereichen, insbesondere der Verbrennungsluftfördervorrichtung, einzuführen. Die maximal einstellbare Drehzahländerungsrate kann beispielsweise definiert bzw. begrenzt sein durch die an einen Elektromotor der Verbrennungsluftfördervorrichtung maximal anlegbare, also von einem Bordspannungsnetz maximal bereitgestellte Spannung oder durch die für einen derartigen Elektromotor maximal zulässige Betriebsspannung bzw. mittlere Betriebsspannung. Bei elektrisch kommutierten Motoren kann die Änderung der Drehzahl durch eine Spannungsregelung erfolgen. Durch eine derart schnelle Veränderung der Drehzahl der Verbrennungsluftfördervorrichtung ist gewährleistet, dass ein Anregungsfrequenzbereich, in welchem auch eine Resonanzfrequenz von Verbrennungspulsationen der sich ausbildenden Flamme liegt, sehr schnell durchlaufen wird und somit die Entstehung von Verbrennungsresonanzen vermieden werden kann

Ein schneller Übergang in die Flammstabilisierungsphase kann auch dadurch unterstützt werden, dass eine Zeitdauer der Zündphase im Bereich von 2 s bis 4 s, vorzugsweise bei etwa 3 s, liegt.

Um die Umgebungsbedingungen bei der Flammstabilisierung berücksichtigen zu können, kann vorgesehen sein, dass eine Zeitdauer der Flammstabilisierungsphase in Abhängigkeit von einer Umgebungstemperatur oder/und einer Temperatur im Bereich der Brennkammerbaugruppe eingestellt wird. Vorteilhafterweise nimmt dabei die Zeitdauer der Flammstabilisierungsphase mit abnehmender Umgebungstemperatur oder/und Temperatur im Bereich der Brennkammerbaugruppe zu.

Um zu gewährleisten, dass in der Flammstabilisierungsphase ein unterstöchiometrisches Gemisch aus Brennstoff und Verbrennungsluft erzeugt wird, kann eine Brennstoff-Förderrate in der ersten Drehzahlanpassungsphase und der Flammstabilisierungsphase im Wesentlichen der Zündphasen-Förderrate entsprechen.

Zum Übergang in den an die Startphase anschließenden Verbrennungsbetrieb kann in der zweiten Drehzahlanpassungsphase die Brennstoff-Förderrate auf eine für den

Verbrennungsbetrieb vorgesehene Verbrennungsbetrieb-Förderrate eingestellt werden. Erfordert die für den nachfolgenden Verbrennungsbetrieb vorgegebene Soll-Heizleistung des Fahrzeugheizgeräts eine größere Brennstoffmenge, kann in der zweiten Drehzahlanpassungsphase die Brennstoff-Förderrate entsprechend erhöht werden. Ist ein Fahrzeugheizgerät beispielsweise nur in einer einzigen Heizleistungsstufe betreibbar und dementsprechend beispielsweise die Brennstofffördervorrichtung nur aus- und einschaltbaren, in ihrer Fördermenge jedoch im Wesentlichen nicht variierbar, kann die für den nachfolgenden Verbrennungsbetrieb vorgesehene Verbrennungsbetrieb-Förderrate der zuvor beispielsweise bereits für die Zündphase eingestellten Zündphase-Förderrate entsprechen, so dass das Einstellen der Brennstoff-Förderrate auf die für den nachfolgenden Verbrennungsbetrieb vorgesehene Verbrennungsbetrieb-Förderrate im Wesentlichen das Beibehalten der zuvor bereits genutzten Brennstoff-Förderrate umfasst.

Die vorliegende Erfindung wird nachfolgend mit Bezug auf die beiliegenden Figuren detailliert beschrieben. Es zeigt:
- Fig. 1: eine prinzipartige Darstellung eines brennstoffbetriebenen Fahrzeugheizgeräts;
- Fig. 2: ein Zeitdiagramm, welches ein Beispiel für die Veränderung der in einer Startphase des Verbrennungsbetriebs eines brennstoffbetriebenen Fahrzeugheizgeräts geförderten Brennstoffmenge bzw. Verbrennungsluftmenge zeigt.

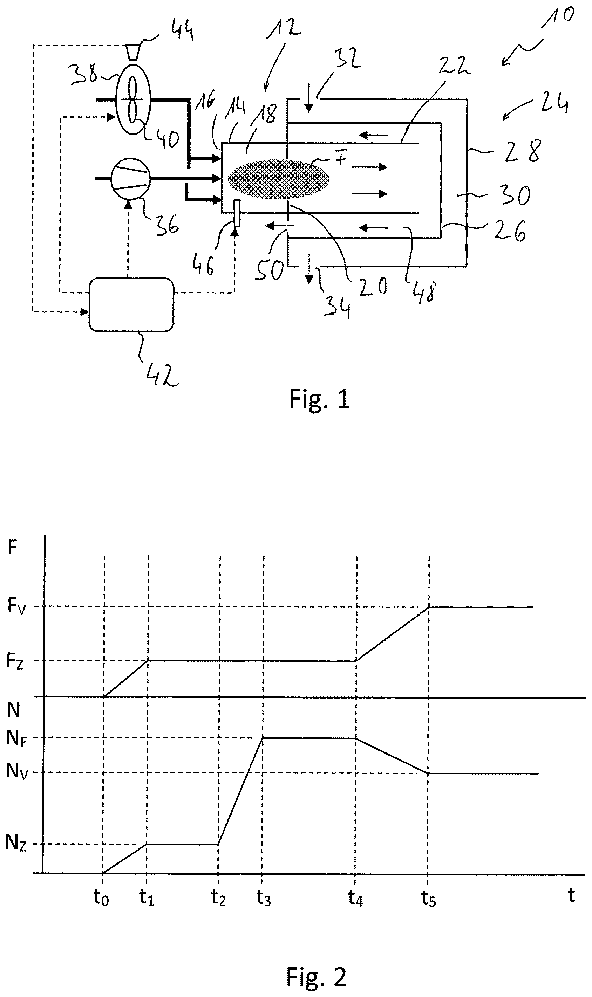

In Fig. 1 ist ein brennstoffbetriebenes Fahrzeugheizgerät 10 in prinzipieller Art dargestellt. Das Fahrzeugheizgerät 10 umfasst als zentrale Baugruppe eine Brennkammerbaugruppe 12 mit einer von einer Umfangswand 14 und einer Bodenwand 16 umgrenzten Brennkammer 18 und einem beispielsweise im Bereich einer Flammblende 20 an die Umfangswand 14 anschließenden Flammrohr 22.

Die Brennkammer 12 ist zumindest bereichsweise umgeben von einer Wärmetauscherbaugruppe 24 mit einem von einem topfartigen inneren Gehäuse 26 und einem topfartigen äußeren Gehäuse 28 begrenzten Wärmeträgermedium-Strömungsraum 30. An einem Wärmeträgermediumeintritt 32 kann zu erwärmendes flüssiges Medium in den Wärmeträgermedium-Strömungsraum 30 eintreten, diesen zur Wärmeaufnahme durchströmen und an einem Wärmeträgermediumaustritt 34 wieder verlassen. Es ist darauf hinzuweisen, dass für den Fall, dass das Fahrzeugheizgerät 10 zum Erwärmen eines gasförmigen Wärmeträgermediums, beispielsweise der in einen Fahrzeuginnenraum einzuleitenden Luft, ausgebildet ist, die Brennkammer 12 in einem von der zu erwärmenden Luft durchströmbaren Gehäuse angeordnet sein kann.

Zur Erzeugung von Wärme wird ein aus einem Tank entnommener, flüssiger Brennstoff vermittels einer beispielsweise als Dosierpumpe ausgebildeten Brennstofffördervorrichtung 36 in die Brennkammer 18 eingespeist. Bei Ausgestaltung der Brennkammerbaugruppe 12 als Verdampferbrenner kann der flüssige Brennstoff beispielsweise in ein poröses Verdampfermedium eingespeist und über dieses in Gasform in die Brennkammer 18 abgegeben werden. Bei Ausgestaltung als Zerstäuberbrenner kann der flüssige Brennstoff einer Zerstäuberdüse zugeführt werden, über welche der Brennstoff in Form eines Sprühnebels in die Brennkammer 18 abgegeben wird.

Zur Bereitstellung des zur Verbrennung erforderlichen Sauerstoffs wird Verbrennungsluft vermittels einer beispielsweise als Seitenkanalgebläse ausgebildeten Verbrennungsluftfördervorrichtung 38 in die Brennkammer 18 eingespeist. Die Verbrennungsluftfördervorrichtung 38 umfasst ein zum Fördern der Verbrennungsluft drehbares Förderrad 40, welches im Allgemeinen durch einen Elektromotor zur Drehung angetrieben ist.

Die Brennstofffördervorrichtung 36 und die Verbrennungsluftfördervorrichtung 38 stehen unter der Ansteuerung einer Ansteuereinheit 42. Dieser kann beispielsweise von einem der Verbrennungsluftfördervorrichtung 38 zugeordneten Drehzahlsensor 44 Information über die Drehzahl des Förderrads 40 der Verbrennungsluftfördervorrichtung 38 zugeführt werden, und unter Berücksichtigung dieser Ist-Drehzahl kann die Ansteuereinheit 42 die Verbrennungsluftfördervorrichtung 38 derart ansteuern, dass das Förderrad 40 derselben sich mit einer für einen vorgegebenen Betrieb definierten Soll-Drehzahl dreht. Alternativ zu einem derart geregelten Betrieb der Verbrennungsluftfördervorrichtung 38 kann diese in einem gesteuerten Betrieb durch Anlegen einer einer Soll-Drehzahl des Förderrads 40 zugeordneten Spannung bzw. mittleren Spannung betrieben werden.

Auch die Brennstofffördervorrichtung 36 steht unter der Ansteuerung der Ansteuervorrichtung 42 und kann insbesondere bei Ausgestaltung als Dosierpumpe zum Einstellen der in die Brennkammer 18 einzuspeisenden Brennstoffmenge derart angesteuert werden, dass die Brennstofffördervorrichtung 36 mit einer einer derartigen für einen Betrieb vorgegebenen Soll-Brennstoffmenge zugeordneten Taktfrequenz betrieben wird.

Um ein in der Brennkammer 18 vorhandenes bzw. sich bildendes Gemisch aus Brennstoff und Verbrennungsluft zu zünden, weist die Brennkammerbaugruppe 12 ein beispielsweise als Glühzündstift ausgebildetes Zündorgan 46 auf. Auch dieses steht unter der Ansteuerung der Ansteuereinheit 42, so dass am Beginn des Verbrennungsbetriebs des Fahrzeugheizgeräts 10 zum Zünden des in der Brennkammer 18 gebildeten oder sich bildenden Gemisches aus Brennstoff und Verbrennungsluft die Ansteuereinheit 42 das Zündorgan 46 ansteuert und dieses zum Erzeugen einer zum Zünden des Gemisches ausreichenden Temperatur erregt.

Nachfolgend wird mit Bezug auf die Fig. 2 ein Verfahren beschrieben, mit welchem das Fahrzeugheizgerät 10 in einer Startphase zum Starten des Verbrennungsbetriebs betrieben werden kann.

Zu einem Zeitpunkt t₀ wird durch die Ansteuereinheit 42 oder einen anderen Systembereich eines Fahrzeugs ein Startbefehl zum Starten des Betriebs des Fahrzeugheizgeräts 10 mit einer zu einem kontinuierlichen Verbrennungsbetrieb führenden Startphase erzeugt. Nach Erzeugung oder Zuführung des Startbefehls setzt die Ansteuereinheit 42 die sich zunächst in einem Außer-Betriebszustand befindenden Fördervorrichtungen 36, 38 in Betrieb, so dass in einer auf den Zeitpunkt t₀ folgenden Zündphase bis zu einem Zeitpunkt t₁ die Drehzahl N der Verbrennungsluftfördervorrichtung 38 bzw. des Förderrads 40 derselben mit einer beispielsweise im Wesentlichen konstanten Drehzahländerungsrate bis zu einer Zünddrehzahl Nz erhöht wird und bis zum Ende der Zündphase zu einem Zeitpunkt t₂ bei dieser Drehzahl gehalten wird.

Einhergehend mit der Inbetriebnahme der Verbrennungsluftfördervorrichtung 38 und der Erhöhung der Drehzahl N des Förderrads 40 wird auch die Brennstofffördervorrichtung 36 in Betrieb gesetzt und deren Brennstoff-Förderrate F beispielsweise im Wesentlichen konstant auf eine der Zündphasen-Drehzahl Nz zugeordnete Zündphasen-Förderrate Fz erhöht. Um während der gesamten Zündphase ein Gemisch aus Verbrennungsluft und Brennstoff bereitzustellen, welches im Wesentlichen dem für die Zündphase bereitzustellenden Verhältnis entspricht, kann die Brennstoff-Förderrate F gleichlaufend mit der Drehzahl N erhöht werden, so dass die Zündphasen-Förderrate F_{Z} im Wesentlichen auch zum Zeitpunkt t₁ erreicht wird und dann für den verbleibenden Zeitraum der Zündphase kontinuierlich Verbrennungsluft und Brennstoff mit dem für die Zündphase vorzusehenden Mischungsverhältnis, beispielsweise im Wesentlichen einem stöchiometrischen Verhältnis, also für einen Lambda-Wert von 1, zugeführt werden. Dieses Verhältnis kann für die Zündphase auch von einem Lambda-Wert von 1 geringfügig beispielsweise in Richtung zu einem überstöchiometrischen Verhältnis oder ggf. auch einem unterstöchiometrischen Verhältnis abweichen. Abhängig von der Bauart des Fahrzeugheizgeräts 10 können die Zündphasen-Drehzahl Nz und die Zündphasen-Förderrate Fz auch zu unterschiedlichen Zeitpunkten erreicht werden.

Die zwischen den Zeitpunkten t₀ und t₂ liegende Zündphase kann beispielsweise so ausgelegt sein, dass diese etwa 3 s andauert, so dass im Verlaufe dieser Zündphase einerseits das zündfähige Gemisch aus Brennstoff und Verbrennungsluft mit dem für die Zündphase vorgesehenen Mengenverhältnis erzeugt werden kann und andererseits in dieser Zündphase durch Erregen des Zündorgans 46 auch die Zündung erfolgen kann. Dies bedeutet, dass bereits in der Zündphase in der Brennkammer 18 die Verbrennung startet und eine Flamme F beginnt, sich auszubilden.

Anschließend an die Zündphase wird in einer ersten Drehzahlanpassungsphase ab dem Zeitpunkt t₂ bis zu einem Zeitpunkt t₃ die Drehzahl N und damit die Förderrate der Verbrennungsluftfördervorrichtung 38 stark angehoben. Es ist vorzugsweise vorgesehen, dass in der ersten Drehzahländerungsphase die Drehzahl N mit einer bei der Verbrennungsluftfördervorrichtung 28 maximal einstellbaren Drehzahländerungsrate erhöht wird. Diese maximal einstellbare Drehzahländerungsrate kann beispielsweise durch die in einem Bordspannungsnetz eines Fahrzeugs maximal zur Verfügung stehende und in diesem Zustand kontinuierlich, also mit einem Tastverhältnis von 100%, an einen Elektromotor der Drehzahlfördervorrichtung 38 angelegte Bordnetzspannung begrenzt sein. Ist diese Bordnetzspannung beispielsweise höher als die Spannung, welche an den Elektromotor der Verbrennungsluftfördervorrichtung 38 maximal angelegt werden darf, kann die maximal einstellbare Drehzahländerungsrate begrenzt sein durch die für die Verbrennungsluftfördervorrichtung 38 maximal nutzbare Spannung bzw. mittlere Spannung, welche durch Vorgabe eines entsprechend begrenzten Tastverhältnisses für die an den Elektromotor der Verbrennungsluftfördervorrichtung 38 angelegte Spannung eingestellt werden kann.

In der ersten Drehzahlanpassungsphase wird die Drehzahl N auf eine einer ab dem Zeitpunkt t₃ folgenden Flammstabilisierungsphase zugeordnete Flammstabilisierungsphasen-Drehzahl N_{F} mit beispielsweise im Wesentlichen konstanter Drehzahländerungsrate angehoben. In der Flammstabilisierungsphase wird bis zu einem Zeitpunkt t₄ die Flammstabilisierungsphasen-Drehzahl N_{F} beispielsweise im Wesentlichen konstant beibehalten.

Durch das schnelle Erhöhen der Drehzahl N der Verbrennungsluftfördervorrichtung 38 auf die Flammstabilisierungsphasen-Drehzahl N_{F}, welche deutlich höher ist als die Zündphase-Drehzahl Nz, wird erreicht, dass eine Anregungsfrequenz der Verbrennungsluftfördervorrichtung 38 in der Flammstabilisierungsphase deutlich höher ist, als eine Resonanzfrequenz von Verbrennungsungleichförmgkeiten in der sich ausbildenden Flamme F. Werden derartige Verbrennungsungleichförmgkeiten mit einer im Bereich von deren Resonanzfrequenz liegenden Anregungsfrequenz angeregt, können in der Brennkammerbaugruppe 12 akustisch wahrnehmbare Verbrennungsresonanzen insbesondere dann entstehen, wenn die Umgebung der Verbrennung, also insbesondere die Umfangswand 14 bzw. das Flammrohr 22 noch nicht auf Betriebstemperatur sind und eine thermische Wechselwirkung der sich ausbildenden Flamme mit diesem Systembereichen das Entstehen von Ungleichförmlichkeiten in der Verbrennung begünstigt.

Die Anregung derartiger im ungünstigen Falle zu einer Verbrennungsresonanzen führender Oszillationen in der Verbrennung kann durch im Bereich der Verbrennungsluftfördervorrichtung 38 durch die Rotation des Förderrads 40 generierte periodische Druckpulsationen erfolgen, die sich in der Verbrennungsluft in den Bereich der Brennkammer 18 bzw. der sich ausbildenden Flamme F fortsetzen können. Die Frequenz derartiger durch die Rotation des Förderrads 40 erzeugter periodischer Druckpulsationen kann im Wesentlichen bestimmt sein durch das Produkt der Drehzahl des Förderrads 40 und der Anzahl der Förderschaufeln desselben. Beispielsweise bei Ausgestaltung der Verbrennungsluftfördervorrichtung 38 als Seitenkanalgebläse bewegen die Förderschaufeln des Förderrads desselben sich bei jeder Umdrehung des Förderrads über einen einen Einlass und einen Auslass eines Ringkanals des Seitenkanalgebläses trennenden Unterbrecherbereich, wobei jede Bewegung einer Förderschaufeln über diesen Unterbrecherbereich zu einer in der geförderten Verbrennungsluft sich ausbreitenden Druckvariation führen kann.

Durch das schnelle Erhöhen der Drehzahl N der Verbrennungsluftfördervorrichtung 38 bzw. des Förderrads 40 derselben auf die Flammstabilisierungsphasen-Drehzahl Nz wird nicht nur der Anregungsfrequenzbereich, in welchem die Gefahr der Entstehung von Verbrennungsresonanzen potenziell gegeben ist, schnell durchlaufen, sondern es wird nachfolgend der Flammstabilisierungsphase ein stark unterstöchiometrisches Gemisch aus Brennstoff und Verbrennungsluft in der Brennkammer 18 erzeugt und verbrannt. Dies gewährleistet einerseits, dass auch in der Flammstabilisierungsphase der eingeleitete Brennstoff vollständig verbrannt werden kann und unterstützt andererseits eine schnelle Erwärmung der Brennkammerbaugruppe 12, insbesondere des Flammrohrs 22, auf eine Betriebstemperatur, welche auch bei thermischer Wechselwirkung zwischen der Flamme F und beispielsweise dem Flammrohr 22 nicht zu die Entstehung von Verbrennungsresonanzen begünstigenden Ungleichförmigkeit in der Verbrennung führt. Es hat sich gezeigt, dass eine Erhöhung der Drehzahl N der Verbrennungsluftfördervorrichtung 38 derart, dass das dann in der Brennkammer 18 gebildete Gemisch aus Brennstoff und Verbrennungsluft einen Lambda-Wert von weniger als 0,8 aufweist, eine derart hohe Drehzahl und damit hohe Anregungsfrequenz der Verbrennungsluftfördervorrichtung 38 bedingt, dass auch bei noch nicht stabilisierter Flamme bzw. Verbrennung die Anregung von Verbrennungsresonanzen nicht auftritt.

Die Drehzahl der Verbrennungsluftfördervorrichtung 38 bzw. die Anregungsfrequenz bzw. ein Anregungsfrequenzbereich, bei welchem in dem Fahrzeugheizgerät 10 die Gefahr der Entstehung von Verbrennungsresonanzen besteht, kann beispielsweise bei einem aufgebauten Fahrzeugheizgerät insbesondere auch unter Berücksichtigung verschiedener Umgebungsbedingungen dadurch ermittelt wird, dass in einer Startphase die Drehzahl der Verbrennungsluftfördervorrichtung 38 derart variiert wird, dass Verbrennungsresonanzen tatsächlich entstehen. Ist diese kritische Drehzahl bzw. ein kritischer Drehzahlbereich bekannt, kann die Flammstabilisierungsphasen-Drehzahl N_{F} auch in Zuordnung zu verschiedenen Umgebungsbedingungen so gewählt bzw. vorgegeben werden, dass ein ausreichender Sicherheitsabstand zu einer die Entstehung von Verbrennungsresonanzen begünstigenden Drehzahl besteht.

Da die Ausbildung und Stabilisierung der Flamme F auch stark abhängig von Umgebungsbedingungen, wie z. B. der Brennstofftemperatur, der Temperatur der in die Brennkammer 18 eingeleiteten Verbrennungsluft, der Temperatur im Bereich der Brennkammer 12 selbst, der Luftfeuchtigkeit und dem Luftdruck, kann die Zeitdauer der Flammstabilisierungsphase, also das Intervall zwischen den Zeitpunkten t₃ und t₄, abhängig von derartigen Umgebungsbedingungen, insbesondere der Umgebungstemperatur bzw. der Temperatur im Bereich der Brennkammer selbst, eingestellt werden. Diese Temperaturen können beispielsweise durch entsprechende Sensoren erfasst werden, und die Ausgangssignale dieser Sensoren können in der Ansteuereinheit 42 zur Einstellung der Zeitdauer der Flammstabilisierungsphase genutzt werden. Dabei kann vorgesehen sein, dass mit abnehmender Umgebungslufttemperatur bzw. Temperatur im Bereich der Brennkammerbaugruppe 12 die Dauer der Flammstabilisierungsphase zunimmt. Es hat sich gezeigt, dass beispielsweise dann, wenn die Temperatur in der Umgebung des Fahrzeugheizgeräts 10 und damit beispielsweise auch die Temperatur der Brennkammerbaugruppe 12 bei Raumtemperatur, also bei etwa 20 °C, liegt, die Dauer der Flammstabilisierungsphase in einem Bereich von 40-50 Sekunden liegen sollte, um insbesondere auch durch ausreichende Erwärmung der Brennkammerbaugruppe selbst eine stabile Verbrennung zu begünstigen. Liegt die Temperatur in der Umgebung der Brennkammerbaugruppe 12, welche im Wesentlichen dann auch der Temperatur der in die Brennkammer 18 eingeleiteten Verbrennungsluft bzw. der Temperatur der Brennkammerbaugruppe 12, insbesondere des Flammrohrs 22, entspricht, bei etwa -40 °C, kann für eine Stabilisierung der Verbrennung eine Zeitdauer der Flammstabilisierungsphase im Bereich von einigen Minuten erforderlich sein.

Am Ende der Flammstabilisierungsphase zum Zeitpunkt t₄ wird in einer zweiten Drehzahlanpassungsphase bis zu einem Zeitpunkt t₅ die Drehzahl N der Verbrennungsluftfördervorrichtung 38 bzw. des Förderrads 40 mit einer Drehzahländerungsrate verringert, deren Betrag kleiner ist, als der Betrag der Drehzahländerungsrate in der ersten Drehzahlanpassungsphase zwischen den Zeitpunkten t₂ und t₃. Einhergehend mit dieser Verringerung der Drehzahl N auf eine für einen nachfolgenden Verbrennungsbetrieb ab dem Zeitpunkt t₅ in Zuordnung zu einer dann beispielsweise auch abhängig von Umgebungsbedingungen bzw. einer Temperatur eines zu erwärmenden Mediums einzustellenden Heizleistung vorgegebene Verbrennungsbetrieb-Drehzahl Nv beispielsweise in der zweiten Drehzahlanpassungsphase auch die Förderrate F der Brennstofffördervorrichtung 36 auf eine dem nachfolgend durchzuführenden Verbrennungsbetrieb bzw. der für diesen vorgesehenen Heizleistung zugeordnete Verbrennungsbetrieb-Förderrate Fv erhöht werden, wenn die geforderte Heizleistung eine Brennstoffmenge erfordert, die größer ist als die durch Betreiben der Brennstofffördervorrichtung 36 mit der Zündphasen-Förderrate Fz in die Brennkammer 18 geförderte Brennstoffmenge. Ist die in der Zündphase geförderte Brennstoffmenge auch für den nachfolgenden Verbrennungsbetrieb ausreichend oder kann das Fahrzeugheizgerät 10 grundsätzlich nur mit einer einzigen Heizleistungsstufe betrieben werden, kann im Übergang von der Flammstabilisierungsphase in den Verbrennungsbetrieb, also zwischen den Zeitpunkten t₄ und t₅, die Brennstoff-Förderrate F im Wesentlichen unverändert bleiben.

Die Verbrennungsbetrieb-Drehzahl Nv und die Verbrennungsbetrieb-Förderrate Fv sind grundsätzlich derart bemessen, dass für den ab dem Zeitpunkt t₅ durchgeführten Verbrennungsbetrieb die zum Einstellen der geforderten Heizleistung vorgesehene Menge des Gemisches aus Verbrennungsluft und Brennstoff mit einem für den Verbrennungsbetrieb vorgesehenen Mischungsverhältnis, beispielsweise einen stöchiometrischen oder leicht unterstöchiometrischen Mischungsverhältnis, bereitgestellt wird.

Mit der vorangehend beschriebenen Vorgehensweise kann das Fahrzeugheizgerät 10 in einem Kaltstart oder auch einem Neustart, beispielsweise nach einem Flammabriss, in den Verbrennungsbetrieb überführt werden, ohne dass dabei außerhalb des Fahrzeugheizgeräts 10 akustisch wahrnehmbare Verbrennungsresonanzen bei der Ausbildung der Flamme F entstehen. Gleichzeitig wird durch einen Betrieb mit einem stark unterstöchiometrischen Gemisch aus Brennstoff und Verbrennungsluft dafür gesorgt, dass im Wesentlichen kein unverbrannter Brennstoff aus der Brennkammerbaugruppe 12 austritt und zusammen mit dem auch bereits bei der Ausbildung der Flamme F entstehenden Verbrennungsabgas einen zwischen dem Flammrohr 22 und der Wärmetauscherbaugruppe 24 gebildeten Abgasströmungsraum 48 in Richtung zu einem Abgasaustritt 50 verlässt.

Das erfindungsgemäße Verfahren kann in verschiedenen Aspekten von der vorangehend beschriebenen und in Fig. 2 dargestellten Vorgehensweise abweichen. So kann beispielsweise in zumindest einer der Drehzahlanpassungsphase die Drehzahl N der Verbrennungsluftfördervorrichtung 38 mit sich ändernder Drehzahländerungsrate verändert werden, so dass in einer oder beiden Drehzahländerungsphasen jeweils zeitweise eine maximale Drehzahländerungsrate vorliegt. Bei konstanter Drehzahländerungsrate entspricht diese der maximalen Drehzahländerungsrate in einer jeweiligen Drehzahlanpassungsphase.

In der Zündphase oder/und der Flammstabilisierungsphase kann, abweichend von den dargestellten im Wesentlichen konstanten Drehzahlen N bzw. Brennstoff-Förderraten F, vorgesehen sein, dass die Drehzahl N oder/und die Brennstoff-Förderrate F näherungsweise auf dem dargestellten Niveau bleibt, in diesem Bereich aber beispielsweise geringfügig variiert. Beispielsweise kann vorgesehen sein, dass ab dem Zeitpunkt t₁ oder dem Zeitpunkt t₂ die Brennstoff-Förderrate F mit einer vergleichsweise geringen Änderungsrate beispielsweise bis zum Zeitpunkt t₅ näherungsweise konstant zunimmt, so dass ohne weitere Anpassungsmaßnahmen ab dem Zeitpunkt t₅ der Brennstoff mit der für den dann durchzuführenden Verbrennungsbetrieb vorzusehenden Verbrennungsbetrieb-Förderrate Fv in die Brennkammer 18 eingespeist wird.

## Patentansprüche

1. Verfahren zum Starten des Verbrennungsbetriebs eines brennstoffbetriebenen Fahrzeugheizgeräts, das Fahrzeugheizgerät umfassend:
- eine mit Brennstoff und Verbrennungsluft zu speisende Brennkammerbaugruppe (12),
- eine Brennstofffördervorrichtung (36) zum Fördern von Brennstoff in eine Brennkammer (18) der Brennkammerbaugruppe (12),
- eine Verbrennungsluftfördervorrichtung (38) zum Fördern von Verbrennungsluft in die Brennkammer (18), wobei die Verbrennungsluftfördervorrichtung (38) wenigstens ein zum Fördern von Verbrennungsluft zur Drehung antreibbares Förderrad (40) umfasst,
wobei das Verfahren die Maßnahmen umfasst:
a) in einer Zündphase nach Erzeugung eines Startbefehls zum Starten des Verbrennungsbetriebs, Betreiben der Verbrennungsluftfördervorrichtung (38) zum Fördern von Verbrennungsluft in die Brennkammer (18) mit einer der Zündphase zugeordneten Zündphasen-Drehzahl (Nz) und Betreiben der Brennstofffördervorrichtung (36) zum Fördern von Brennstoff in die Brennkammer (18) mit einer der Zündphase zugeordneten Zündphasen-Förderrate (Fz) zum Bereitstellen eines zündfähigen Brennstoff/Verbrennungsluft-Gemisches,
b) in einer auf die Zündphase folgenden ersten Drehzahlanpassungsphase, Verändern der Drehzahl (N) der Verbrennungsluftfördervorrichtung (38) auf eine nicht zur Erzeugung einer Verbrennungsresonanz in der Brennkammerbaugruppe (12) führende Flammstabilisierungsphasen-Drehzahl (N_{F}),
c) in einer auf die erste Drehzahlanpassungsphase folgenden Flammstabilisierungsphase, Betreiben der Verbrennungsluftfördervorrichtung (38) im Wesentlichen mit der Flammstabilisierungsphasen-Drehzahl (N_{F}),
d) in einer auf die Flammstabilisierungsphase folgenden zweiten Drehzahlanpassungsphase, Verringern der Drehzahl (N) der Verbrennungsluftfördervorrichtung auf eine Verbrennungsbetrieb-Drehzahl (N_{V}),
e) in einem auf die zweite Drehzahlanpassungsphase folgenden Verbrennungsbetrieb, Betreiben der Verbrennungsluftfördervorrichtung (38) im Wesentlichen mit der Verbrennungsbetrieb-Drehzahl (Nv).

2. Verfahren nach Anspruch 1,
**dadurch gekennzeichnet, dass** bei der Maßnahme b) zum Bereitstellen der nicht zur Erzeugung einer Verbrennungsresonanz in der Brennkammerbaugruppe (12) führenden Flammstabilisierungsphasen-Drehzahl (N_{F}) die Drehzahl (N) der Verbrennungsluftfördervorrichtung (38), ausgehend von der Zündphasen-Drehzahl (Nz), derart erhöht wird, dass bei der Maßnahme c) in der Brennkammer (18) ein unterstöchiometrisches Gemisch aus Brennstoff und Verbrennungsluft erzeugt wird.

3. Verfahren nach Anspruch 2,
**dadurch gekennzeichnet, dass** bei der Maßnahme b) die Drehzahl (N) der Verbrennungsluftfördervorrichtung (38) derart erhöht wird, dass das in der Brennkammer (18) erzeugte Gemisch aus Brennstoff und Verbrennungsluft einen Lambda-Wert von weniger als 0,8 aufweist.

4. Verfahren nach einem der Ansprüche 1-3,
**dadurch gekennzeichnet, dass** bei der Maßnahme a) die Zündphasen-Drehzahl (Nz) und die Zündphasen-Förderrate (Fz) zum Bereitstellen eines im Wesentlichen stöchiometrischen Brennstoff/Verbrennungsluft-Gemisches eingestellt werden.

5. Verfahren nach einem der Ansprüche 1-4,
**dadurch gekennzeichnet, dass** bei der Maßnahme b) die Drehzahl mit im Wesentlichen konstanter Drehzahländerungsrate erhöht wird, oder/und dass bei der Maßnahme d) die Drehzahl mit im Wesentlichen konstanter Drehzahländerungsrate verringert wird.

6. Verfahren nach einem der Ansprüche 1-5,
**dadurch gekennzeichnet, dass** bei der Maßnahme b) die Drehzahl (N) mit einem maximalen ersten Betrag der Drehzahländerungsrate erhöht wird, dass bei der Maßnahme d) die Drehzahl (N) mit einem maximalen zweiten Betrag der Drehzahländerungsrate verringert wird, und dass der maximale erste Betrag größer ist als der maximale zweite Betrag.

7. Verfahren nach Anspruch 6,
**dadurch gekennzeichnet, dass** der maximale erste Betrag der Änderungsrate im Wesentlichen einer bei der Verbrennungsluftfördervorrichtung (38) zum Erhöhen der Drehzahl (N) maximal einstellbaren Drehzahländerungsrate entspricht.

8. Verfahren nach einem der Ansprüche 1-7,
**dadurch gekennzeichnet, dass** eine Zeitdauer der Zündphase im Bereich von 2 s bis 4 s, vorzugsweise bei etwa 3 s, liegt.

9. Verfahren nach einem der Ansprüche 1-8,
**dadurch gekennzeichnet, dass** eine Zeitdauer der Flammstabilisierungsphase in Abhängigkeit von einer Umgebungstemperatur oder/und einer Temperatur im Bereich der Brennkammerbaugruppe eingestellt wird.

10. Verfahren nach Anspruch 9,
**dadurch gekennzeichnet, dass** die Zeitdauer der Flammstabilisierungsphase mit abnehmender Umgebungstemperatur oder/und Temperatur im Bereich der Brennkammerbaugruppe zunimmt.

11. Verfahren nach einem der Ansprüche 1-10,
**dadurch gekennzeichnet, dass** eine Brennstoff-Förderrate (F) in der ersten Drehzahlanpassungsphase und der Flammstabilisierungsphase im Wesentlichen der Zündphasen-Förderrate (Fz) entspricht.

12. Verfahren nach einem der Ansprüche 1-11,
**dadurch gekennzeichnet, dass** in der zweiten Drehzahlanpassungsphase die Brennstoff-Förderrate (F) auf eine für den Verbrennungsbetrieb vorgesehene Verbrennungsbetrieb-Förderrate (Fv) eingestellt wird.
